# EUROPÄISCHE PATENTSCHRIFT

(11) **EP 1 321 336 B1**
(45) Veröffentlichungstag und Bekanntmachung des Hinweises auf die Patenterteilung: **08.07.2009**
(21) Anmeldenummer: 02027463.5
(22) Anmeldetag: 10.12.2002
(51) Int. Cl.: B60R 21/20

(54) **Abdeckung für einen Gassack einer Aufprallschutzvorrichtung für Fahrzeuginsassen**
Airbag cover for passenger collision protection device
Couvercle de coussin gonflable pour dispositif de protection des passagers contre le choc

(30) Priorität: 20.12.2001 DE 10162611
(43) Veröffentlichungstag der Anmeldung: 25.06.2003
(73) Patentinhaber: ADAM OPEL AG, 65423 Rüsselsheim (DE)
(72) Erfinder: Rick, Ulrich, Dipl.-Ing., 55595 Roxheim (DE)

(56) Entgegenhaltungen:
- EP-A- 0 963 806
- DE-A- 4 005 188
- US-A- 4 995 638
- US-A- 5 499 842
- US-A- 6 142 510
- US-B1- 6 247 722
- PATENT ABSTRACTS OF JAPAN vol. 1998, no. 10, 31. August 1998 (1998-08-31) & JP 10 129383 A (NIPPON PLAST CO LTD), 19. Mai 1998 (1998-05-19)

## Beschreibung

Die Erfindung betrifft eine Abdeckung für einen Gassack einer Aufprallschutzvorrichtung für Fahrzeuginsassen gemäß dem Oberbegriff der unabhängigen Patentansprüche.

Derartige Aufprallschutzvorrichtungen sind als sogenannte Airbags bekannt. Aus optischen Gründen ist es wünschenswert, diese mit nicht sichtbaren Klappen zu verdecken. Aus dem Stand der Technik sind Abdeckungen bekannt, bei denen eine mittlere Reißnaht vorgesehen ist, die beiderseits in vertikale Reißlinien mündet. Diese Anordnung der Reißnähte wird als sogenannte H-Reißnaht bezeichnet. Die Reißnaht ist dabei als gezielte Schwächungszone ausgebildet so, dass sie beim Aktivieren des Airbags von der Mitte her beginnend rasch bis zu den Seiten über die gesamte Breite der Klappen aufreist. Zusätzlich zu dieser Mittelnaht sind bei bekannten Abdeckungen senkrecht dazu verlaufende Seitennähte vorgesehen, welche gleichfalls aufreißen und damit die Schwenkbewegungen der Teilabdeckungen ermöglichen.

Eine Abdeckung bei einer Insassen-Schutzvorrichtung im Kraftfahrzeug ist aus der DE 198 38 603 A1 bekannt, die einen örtlich begrenzten Initialbereich aufweist. In diesem Initialbereich erfolgt bei einer Airbagauslösung die Risseinleitung zum Durchtrennen der Abdeckung. Die weitere Öffnung der Abdeckungen erfolgt entlang einer H-Linie. Eine weitere Abdeckung für ein Fahrzeuginsassenrückhaltesystem in Gestalt eines Airbags ist aus der DE 200 00 956 U1 bekannt. Diese Abdeckung weist eine in die Innenseite der Abdeckung bis zu einer vorbestimmten Restwandstärke eingebrachte Reißlinie auf. Diese Reißlinie weist einen Initialpunkt auf, an dem die Restwandstärke am geringsten ist. Zusätzlich sind an der Innenseite der Abdeckung Versteifungsrippen ausgeformt, die sich entlang einer Linie erstrecken, welche den Initialpunkt tangiert.

Schließlich ist eine weitere Abdeckung für den Gassack einer Aufprallschutzvorrichtung für Fahrzeuginsassen aus der DE 40 05 188 C2 bekannt. Diese Abdeckung verfügt über definierte Schwächungszonen, welche Sollbruchlinien bestimmen, in denen die Stirnwand unter den vom Gassack auf sie aufgebrachten Kräften aufbricht, wenn dieser aufgeblasen wird, um aus der Abdeckung zu entweichen und sich zu seiner vollen Größe auszudehnen. Die Festigkeit der Schwächungszonen variiert, wobei die Schwächungszonen in Bereichen, die der Mitte der Stirnwand näher liegen, eine geringere Festigkeit haben, während sie in Bereichen, die von der Mitte der Stirnwand weiter entfernt sind, eine größere Festigkeit aufweisen.
Die US 6,247,722 B1 offenbart eine Abdeckung für einen Gassack mit einer H-förmigen Reißlinie, die durch eine Vielzahl von Vertiefungen im Material der Abdeckung gebildet wird.
Aus der US 5,499,842 A ist eine Abdeckung für einen Gassack bekannt, bei der der horizontale Abschnitt einer H-förmigen Reißlinie einen U-förmigen Abschnitt aufweist.
Nachteilig bei derartigen Abdeckungen ist, dass ein Durchreißen der relativ langen Mittelnaht von der Mitte aus zu den vertikal verlaufenden Reißlinien infolge von Toleranzen und Material- sowie Prozessschwankungen in einer Großserienfertigung nicht zuverlässig gewährleistet werden kann und dass unter Umständen auch ein Einreißen über die Reißlinien hinaus beim Aufblasvorgang auftreten kann. Auch spielen Festigkeitsveränderungen des Materials, hervorgerufen durch Umwelteinflüsse, Temperaturschwankungen, Ozonbelastung, Klimaveränderungen sowie Alterung eine negative Rolle. Dadurch können die Teilabdeckungen an einer Seite bereits aufklappen, während sie an der anderen Seite noch nicht voll durchgerissen sind. Die Kinematik des sich entfaltenden Gassacks wird dadurch gestört und lässt diesen ungleichmäßig entfalten. Die Schutzwirkung des Airbags kann dadurch reduziert werden. Um dennoch eine prozesssichere Anwendung zu ermöglichen, wird ein relativ hoher Prüf- und Qualitätssicherungsaufwand sowie ständige Korrekturen im Fertigungsablauf notwendig. Entsprechend hohe Zusatzkosten fallen dadurch an.
Ein Ziel der Erfindung besteht darin, eine Abdeckung für einen Gassack einer Aufprallschutzvorrichtung für Fahrzeuginsassen zur Verfügung zu stellen, die jederzeit zuverlässig öffnet, wenn der Gassack entfaltet wird, und die diesen nicht in seiner freien Entfaltung beeinträchtigt.
Dieses Ziel der Erfindung wird mit einem Gegenstand gemäß den unabhängigen Patentansprüchen erreicht. Merkmale vorteilhafter Weiterbildungen der Erfindung ergeben sich aus den jeweiligen abhängigen Ansprüchen.
Dem gemäß weist eine Abdeckung für einen Gassack einer Aufprallschutzvorrichtung für Fahrzeuginsassen mit einer Stirnwand, die zwischen dem gefalteten Gassack und einem Fahrzeuginsassen angeordnet ist, definierte linienartige Schwächungszonen auf, die bei sich entfaltendem Gassack als Sollbruchstellen fungieren, und eine Öffnung der Abdeckung ermöglichen. Die Festigkeit der Schwächungszonen ist variabel ausgestaltet, wobei die Schwächungszonen innerhalb eines ersten Bereichs, der der Mitte der Stirnwand näher liegt, eine relativ geringere Festigkeit aufweisen, wogegen die Schwächungszonen in zweiten bzw. dritten Bereichen, die von der Mitte der Stirnwand weiter entfernt angeordnet sind, eine relativ größere Festigkeit aufweisen. Gemäß einem ersten Aspekt der Erfindung ist vorgesehen, dass die Schwächungszonen innerhalb der Mitte des der Stirnwand näherliegenden, ersten Bereichs einen Initialbereich in Form eines bogen- oder taschenförmigen Abschnittes aufweisen, an dem der sich entfaltende Gassack als erstes flächig andrückt, und der vom sich entfaltenden Gassack als erstes geöffnet wird. Unter der Mitte der Stirnwand wird im vorliegenden Zusammenhang ein Bereich verstanden, der einem Fahrzeuginsassen gegenüber liegt. Eine zum Fahrzeuginsassen senkrechte Ebene, die diesen hochkant schneidet, ist somit annähernd deckungsgleich zu einer Ebene, die senkrecht zur Mitte der Stirnwand orientiert ist.
Die Schwächungszonen definieren jeweils zwei klappenartige Öffnungen, die bei sich entfaltendem Gassack um jeweils ein Scharnier aufgeschwenkt werden. Zweite Übergangsbereiche sind zwischen zweitem bzw. zwischen drittem Bereich und den Scharnieren vorgesehen, und bei wenigstens einer der klappenartigen Öffnungen zwischen zweiten Übergangsbereichen und Scharnier ist jeweils ein S-förmiger bzw. taschenförmiger Abschnitt vorgesehen, der jeweils eine Auswölbung in Richtung des ersten Bereichs aufweist.
Mit dieser erfindungsgemäßen Abdeckung kann erreicht werden, dass auch bei den üblichen Toleranzen einer Großserienfertigung sowie den auftretenden Alterungsprozessen während der Laufzeit des Kraftfahrzeugs die Aufreißnaht sicher und störungsfrei aufreißt, damit der Gassack gleichmäßig entfalten kann. Dies wird dadurch erreicht, indem die horizontale Mittelnaht in ihrem geometrischen Zentrum die kürzeste Wegstrecke (Gerade) zu den vertikalen Reißlinien verlässt und im Mittelbereich bogen- oder taschenförmig verläuft. Damit ergibt sich mittig ein längerer Angriffshebelarm für den Gassack. Ein gezielter Druckaufbau des Gassacks erzeugt zuerst eine Gassackblase, die direkt mittig den verlängerten Hebelarm nutzt und die Airbagklappe druckknopfartig öffnet. Der erste Bereich der Schwächungszonen öffnet somit zuerst und beginnt erst danach, die zweiten und dritten Bereiche aufzureißen.
Gemäß einer Ausgestaltung der Erfindung ist vorgesehen, dass die zweiten und dritten Bereiche der linienartigen Schwächungszonen jeweils an gegenüberliegenden Enden des ersten Bereichs anschließen sowie jeweils in diesen übergehen. Der erste Bereich kann im Wesentlichen horizontal im Fahrzeug verlaufen, so dass die zweiten und dritten Bereiche im Wesentlichen vertikal verlaufen. Alternativ hierzu kann der erste Bereich im Wesentlichen vertikal im Fahrzeug verlaufen, so dass die zweiten und dritten Bereiche im Wesentlichen horizontal verlaufen. Die erfindungsgemäße Abdeckung eignet sich sowohl zum Einsatz in einem Lenkrad des Fahrzeuges als auch auf einer Beifahrerseite in der Armaturentafel. Die ersten, zweiten und dritten Bereiche sind so zueinander angeordnet, dass insgesamt eine H-Reißnaht gebildet wird, deren mittlerer Abschnitt durch einen bogen- bzw. taschenförmigen Initialbereich variiert wird.
Der Initialbereich kann gemäß einer Ausgestaltung der Erfindung als dreieckförmige Ausbuchtung innerhalb des im übrigen geradlinig verlaufenden, ersten Bereichs ausgestaltet sein. Dabei kann es von Vorteil sein, dass eine Spitze des als dreieckförmige Ausbuchtung ausgestalteten Initialbereichs einen spitzen Winkel größer als 90° aufweist. Hierdurch kann gewährleistet werden, dass der sich entfaltende Airbag den Initialbereich zuverlässig aufdrücken kann, wodurch die Öffnung der sich anschließenden Reißnaht links und rechts vom Initialbereich in genau definierter Weise erfolgen kann.
Alternativ kann der Initialbereich auch als bogenförmige Ausbuchtung innerhalb des im übrigen geradlinig verlaufenden, ersten Bereichs ausgestaltet sein. Dabei nimmt der bogenförmige Initialbereich vorzugsweise mehr als die Hälfte des ersten Bereichs ein, so dass ein definierter Aufschlagbereich für eine Luftblase des Gassacks gebildet ist, die als erstes aufreißt, bevor die zweiten oder dritten Bereiche öffnen können.
Gemäß einem weiteren Aspekt der Erfindung sind bei einer Abdeckung für einen Gassack einer Aufprallschutzvorrichtung für Fahrzeuginsassen, die definierte Schwächungszonen aufweist, die bei sich entfaltendem Gassack als Sollbruchstellen fungieren und eine Öffnung der Abdeckung ermöglichen, wobei die Schwächungszonen innerhalb eines ersten Bereichs, der der Mitte der Stirnwand näher liegt, eine relativ geringere Festigkeit aufweisen, wogegen die Schwächungszonen in zweiten bzw. dritten Bereichen, die von der Mitte der Stirnwand weiter entfernt angeordnet sind, eine relativ größere Festigkeit aufweisen, erste Übergangsbereiche zwischen dem ersten und zweiten Bereich bzw. zwischen dem ersten und dritten Bereich vorgesehen, die jeweils als erste Radien ausgebildet sind. Der zweite und dritte Bereich ist durch die Radien vorzugsweise jeweils in obere und untere Abschnitte unterteilt. Die Schwächungszonen definieren jeweils zwei klappenartige Öffnungen, die bei sich entfaltendem Gassack um jeweils ein Scharnier aufgeschwenkt werden. Zweite Übergangsbereiche sind zwischen zweitem bzw. zwischen drittem Bereich und den Scharnieren vorgesehen, und bei wenigstens einer der klappenartigen Öffnungen zwischen zweiten Übergangsbereichen und Scharnier ist jeweils ein S-förmiger bzw. taschenförmiger Abschnitt vorgesehen, der jeweils eine Auswölbung in Richtung des ersten Bereichs aufweist.
Eine auf diese Weise mit einem Initialbereich versehene Abdeckung wird durch einen Initialriss beim Aktivieren des Gassack zuerst in der Mitte der horizontalen Naht aufbersten, wobei der Bruchverlauf sich sehr schnell den beiden vertikalen Reißlinien nähert und dort sanft und homogen durch die groß ausgebildeten Radien eingeleitet wird. Der Gassack kann durch die auf diese Weise symmetrisch freigegebene Öffnung auch symmetrisch entfalten und in gewünschter Weise seine Rückhaltewirkung erzielen.
Durch die Schwächungszonen werden jeweils zwei klappenartige Öffnungen definiert, die bei sich entfaltendem Gassack um jeweils ein Scharnier, das jeweils parallel zum ersten Bereich angeordnet ist, aufgeschwenkt werden. Durch die Festlegung des Initialbereichs sowie die sich vom ersten Bereich über Radien anschließende zweite und dritte Bereiche wird eine sehr gleichmäßig und definierte Öffnung der Abdeckung gewährleistet, die eine Optimale Schutzwirkung des sich entfaltenden Gassackes gewährleisten kann.
Eine weitere Ausführungsform der Erfindung sieht vor, dass zweite Übergansbereiche zwischen zweitem bzw. dritten Bereich und den Scharnieren vorgesehen sind, die jeweils als zweite Radien ausgebildet sind. Der sanfte harmonische Einlauf der Mittelreißnaht in die Vertikalreißnähte sowie der Vertikalreißnähte in die Scharnierbereiche gewährleistet eine zuverlässige Öffnung und vermeidet die Gefahr eines Einreißens bzw. einer Fragmentierung der sich öffnenden Abdeckung. Gemäß einer weiteren Ausführungsform der Erfindung ist bBei wenigstens einer der klappenartigen Öffnungen ist zwischen zweitem Übergangsbereich und Scharnier jeweils ein taschenförmiger Abschnitt vorgesehen, der jeweils eine Auswölbung in Richtung des ersten Bereichs aufweist. Diese Ausgestaltung ermöglicht eine definierte Schwenkbewegung der jeweils mit taschenförmigen Abschnitten versehenen Klappe und vermeidet eine Weiterreißen der Reißnaht in Richtung des Scharniers.
Die Schwächungszonen können beispielsweise in Reihen voneinander beabstandeter Vertiefungen ausgestaltet sein, die an der Innenfläche der Stirnwand angeordnet sind, und von außen nicht sichtbar sind. Die Vertiefungen in den Bereichen der Schwächungszonen, die zuerst aufbrechen sollen, sind vorzugsweise mit geringerem Abstand zueinander angeordnet als in Bereichen, die später aufbrechen sollen. Alternativ hierzu können die Schwächungszonen als kontinuierliche Nuten an der Innenfläche der Stirnwand ausgestaltet sein, die von außen nicht sichtbar sind. Vorzugsweise sind die Nuten in Bereichen der Schwächungszonen, die zuerst aufbrechen sollen, tiefer ausgebildet als in Bereichen, die später aufbrechen sollen. Diese Vertiefungen bzw. Nuten können in vorteilhafterweise auf mechanischem Wege oder auch beispielsweise mittels Laserabtrageverfahren eingebracht werden.

Gemäß einer Ausgestaltung der Erfindung ist die Abdeckung in mehreren Schichten aufgebaut, wobei die oberste Schicht keine oder nur geringe Schwächungszonen bzw. Schwächungen aufweist. Die Schwächungszonen sind vorzugsweise innerhalb einer relativ formstabilen Trägerschicht eingebracht, die zumindest von einer weiteren obersten Schicht bedeckt ist. Die oberste Schicht bildet typischerweise die von außen sichtbare Dekorschicht und kann beispielsweise als Folie, als Kunstlederbespannung oder auch als Naturlederbespannung oder dergleichen ausgebildet sein. Diese Folie bzw. oberste Schicht kann an ihrer nicht sichtbaren Innenseite ebenfalls mit Schwächungszonen versehen sein, die deckungsgleich mit den Schwächungszonen der Trägerschicht sind. Vorzugsweise ist zwischen Trägerschicht mit den Schwächungszonen und der obersten Schicht eine weitere Schicht in Gestalt einer flexiblen Dämpfungsschicht vorgesehen, die zur Gewährleistung einer Aufpralldämpfung relativ flexibel ausgestaltet sein sollte. Diese Dämpfungsschicht kann beispielsweise als PUR-Schaum oder dergleichen ausgebildet sein.

Ein erfindungsgemäßes Verfahren zur Herstellung einer Abdeckung für einen Gassack einer Aufprallvorrichtung für Fahrzeuginsassen gemäß einer der zuvor beschriebenen Ausführungsformen sieht vor, dass in eine Trägerschicht einer Stirnwand, die zwischen dem gefalteten Gassack und einem Fahrzeuginsassen angeordnet ist, abschnittsweise linienförmige Schwächungszonen in Gestalt von Nuten oder Vertiefungen eingebracht werden, die mittels Laserabtragverfahren hergestellt werden. Dieses Verfahren lässt sich in einfacher und kostengünstiger Weise in Großserienfertigung einsetzen.

Ein mittiger Druckaufbau des Gassacks auf die Airbagklappe kann durch gezielte Anordnung der Diffuseröffnung des Gassacks gewährleistet werden. Eine einlagige Gassacküberdeckung der Diffuseröffnung bildet schnell eine Gassackblase. Ein bogenförmiger Mittelbereich erzeugt einen längeren Hebelarm und unterstützt deutlich das Öffnungsverhalten der Abdeckung. Durch die Vermeidung örtlicher Materialausdünnungen wird eine langlebige und robuste Armaturentafel erhalten. Die Initiierung des Aufreißvorganges der Airbagklappen wird alleine von dem Gassack vorgenommen. Er sind keinerlei Maßnahmen, wie zum Beispiel Rippen, Wandstärkenerhöhungen oder andere festigkeits- oder spannungsregulierende Mittel notwendig.

Die Erfindung wird nun anhand von Ausführungsformen mit Bezug auf die beiliegenden Figuren näher erläutert.
- Figur 1: zeigt eine schematische Darstellung einer ersten Ausführungsform einer Gestaltung einer Gassackabdeckung.
- Figur 2: zeigt eine zweite erfindungsgemäße Ausführungsform der Gestaltung der Gassackabdeckung.
- Figur 3: zeigt einen schematischen Querschnitt einer Armaturentafel eines Kraftfahrzeuges mit einer erfindungsgemäßen Abdeckung.
- Figur 4: zeigt den schematischen Querschnitt entsprechend Figur 3 mit sich entfaltendem Gassack.

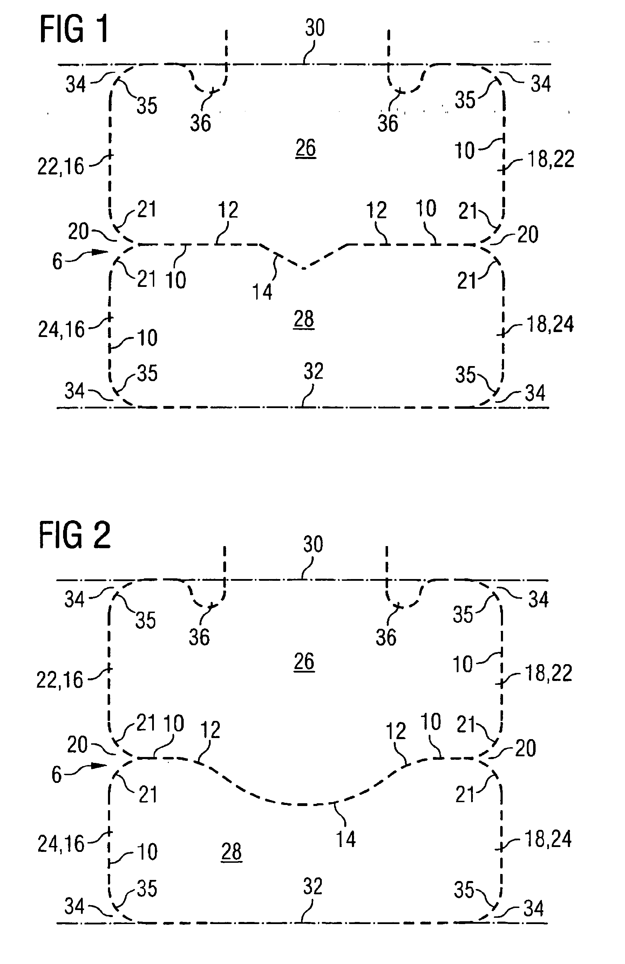

Figur 1 zeigt eine schematische Darstellung einer Abdeckung 6 für einen Gassack, der als Insassenschutzvorrichtung fungiert. Eine gestrichelte Linie charakterisiert Schwächungszonen 10, die als Sollbruchstellen ausgestaltet sind, und entlang derer die Abdeckung 6 bei sich entfaltendem Gassack geöffnet wird. Ein erster Bereich 12 verläuft in horizontaler Richtung und geht links über in einen zweiten Bereich 16 sowie rechts in einen dritten Bereich 18. Die zweiten bzw. dritten Bereiche 16, 18 verlaufen in vertikaler Richtung. Die Übergänge vom ersten Bereich 12 in die zweiten bzw. dritten Bereiche 16, 18 erfolgen jeweils durch einen ersten Übergangsbereich 20 mit relativ weiten ersten Radien. Auf diese Weise wird ein harter Übergang vom ersten horizontalen Bereich 12 in die vertikalen zweiten und dritten Bereiche 16, 18 vermieden. Vielmehr erfolgt der Übergang jeweils in einem relativ weiten Radius und dadurch relativ sanft.

Der erste Bereich 12 weist einen Initialbereich 14 in Form einer mittig angeordneten, dreieckförmigen Ausbuchtung innerhalb des im übrigen geradlinig verlaufenden, ersten Bereich 12 auf. Dieser Initialbereich 14 in Form der dreieckförmigen Ausbuchtung wird als erstes vom sich entfaltenden Gassack getroffen und sorgt dadurch für ein gezieltes Aufreißen an dieser Stelle. Das Aufreißen erfolgt dabei ähnlich einer Druckknopfklappe, da der Aufschlagbereich des auftreffenden Gassacks nicht direkt auf die Reißlinie trifft, sondern auf den Initialbereich 14. Der erste Bereich 12 trennt somit eine obere klappenartige Öffnung 26 von einer unteren klappenartigen Öffnung 28, deren Stirnseite von dem ersten Bereich 12 und deren Seitenkante von den zweiten bzw. dritten Bereichen 16 bzw. 18 bebildet werden. Die klappenartigen Öffnungen 26, 28 schwenken jeweils um ein oberes Scharnier 30 bzw. unteres Scharnier 32, die jeweils durch eine strichpunktierte Linie in Figur 1 angedeutet sind.

Die Übergänge von den zweiten bzw. dritten Bereichen 16 bzw. 18 zu den oberen und unteren Scharnieren 30, 32 erfolgen mittels zweiten Übergangsbereichen 34 in Gestalt jeweils eines zweiten Radius. Diese zweite Radien 35 sind jeweils relativ weit ausgebildet und können, wie dies in Figur 1 dargestellt ist, den Abmessungen der ersten Radien 21 entsprechen. In Figur 1 ist bei der oberen klappenartigen Öffnung 26 zwischen zweitem Übergangsbereichen 34 und oberem Scharnier 30 jeweils ein taschenförmiger Abschnitt vorgesehen, der jeweils eine Auswölbung in Richtung des ersten Bereichs aufweist. Diese taschenförmigen Abschnitte 36, die ebenfalls als Schwächungszonen 10 fungieren, gewährleisten einen definierten Übergang zwischen oberer klappenartiger Öffnung 26 und oberem Scharnier 30. Die Schwächungszone 10 trifft hierbei in rechtem Winkel auf das obere Scharnier 30. Gegebenenfalls kann die untere klappenartige Öffnung 28 mit gleichartigen, taschenförmigen Abschnitten versehen sein. Auf eine solche Ausgestaltung wurde jedoch im Ausführungsbeispiel gemäß Figur 1 verzichtet.

Die beiden Scharnierlinien 30, 32 sind somit deutlich schmäler als die Gesamtbreite der Luftsackabdeckung. Der taschenartige Verlauf der oberen Öffnung 26 sowie ggf. auch der unteren Öffnung 28 verhindert zuverlässig ein Abreißen der Klappe bei hohen Belastungen, wie sie insbesondere bei sogenannten OOP(out of position)-Situationen vorkommen können. Hierbei kann der Fahrzeuginsasse bspw. vorgebeugt sein, wodurch die Gefahr einer hohen Insassenbelastung deutlich ansteigt.

Die schmalen Scharniere 30, 32 ermöglichen zudem einen erhöhten Freiheitsgrad bei der Gestaltung der Armaturentafel 2, da die Abdeckung 6 auf diese Weise problemlos auch auf gewölbten Armaturentafeln untergebracht werden kann. Dies ermöglicht es, breite Abdeckungen 6 auch an mehrdimensional geformten Armaturentafeln 2 unterzubringen, da die Scharnierlinien gerade verlaufen müssen. Der Gefahr des Einreißens derart kurzer Scharnierlinien wird durch die dargestellte Gestaltung der Übergänge zwischen Reißnähten und Scharnier in Form der taschenförmigen Abschnitte 36 begegnet. Um ein Einreißen der Scharnierlinie beim Aufblasvorgang zu vermeiden zu vermeiden, ist der Verlauf der Reißlinie im Anschlussbereich an die Scharnierlinie bogenförmig oder S-förmig gestaltet, wobei am jeweiligen Beginn der Scharnierlinie die Reißlinie senkrecht zur Scharnierlinie verläuft. Die Reißlinie kann über die Scharnierlinie hinaus in die Armaturentafel 2 hinein etwa 5 bis 20 mm geführt werden, wie dies in den Figuren 1 und 2 qualitativ dargestellt ist. Dies ist insbesondere dann von Vorteil, wenn die obere Klappe bzw. klappenartige Öffnung 26 infolge höherer Belastung durch den Insassen noch weiter schwenken oder öffnen soll.

Figur 2 zeigt eine alternative Ausgestaltung der Abdeckung 6, bei der der Initialbereich 14 in Form einer bogenförmigen Ausbuchtung innerhalb des im übrigen geradlinig verlaufenden ersten Bereichs 12 ausgestaltet ist. Wie in Figur 2 deutlich erkennbar ist, wird dadurch die obere klappenartige Öffnung 26 deutlich größer als die entsprechend verkleinerte, untere klappenartige Öffnung 28. Der sich entfaltende Gassack 8 trifft bei einer derartigen Ausgestaltung mit hoher Zuverlässigkeit auf den Initialbereich 14 der oberen klappenartigen Öffnung 26 und sorgt für ein definiertes und gezieltes Aufreißen der Schwächungszone 10 ausgehend von einem mittleren Abschnitt des ersten Bereichs 12, das sich fortsetzt zu den zweiten und dritten Bereichen 16, 18 bis hin zu den oberen bzw. unteren Scharnieren 30, 32. Die übrige Gestaltung entspricht der wie in Figur 1 gezeigt.

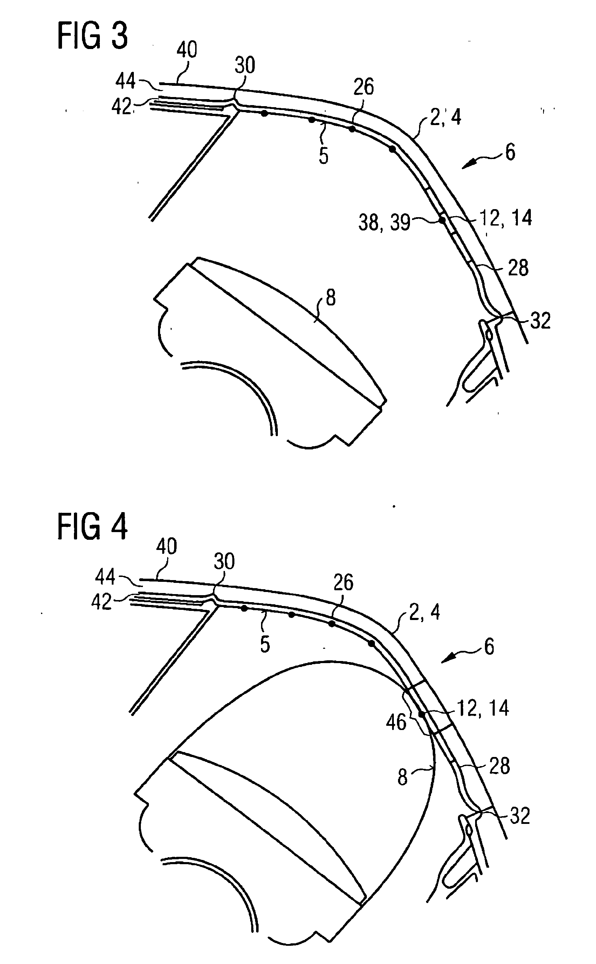

Die schematische Querschnittdarstellung der Figur 3 verdeutlicht den prinzipiellen Aufbau einer Armaturentafel 2 mit einer darin eingebrachten Abdeckung 6, die sich bei entfaltendem Gassack 8 öffnen soll. Dargestellt ist in Figur 3 beispielhaft eine Beifahrerseite eines Kraftfahrzeuginnenraums, der eine Armaturentafel 2 mit einer Stirnwand 4 aufweist. Die Armaturentafel 2 ist im dargestellten Ausführungsbeispiel aus drei Schichten aufgebaut, nämlich einer Trägerschicht 42, die relativ stabil sein muss und die vom sich entfaltenden Gassack durchschlagen werden muss. Auf der Trägerschicht 42 ist eine Dämpfungsschicht 44, beispielsweise in Form einer PUR-Schaumschicht oder dergleichen, angeordnet. Darüber ist eine oberste Schicht 40 vorgesehen, die von außen sichtbar ist und die beispielsweise eine Folie, eine Kunstlederbespannung oder auch eine Naturlederbespannung sein kann. Innerhalb der gewölbten Armaturentafel 2 und beabstandet von dieser ist der Gassack 8 angeordnet, der in Figur 3 sich noch in gefaltetem Zustand befindet und der von einer pyrotechnischen Sprengeinrichtung mit einer Gasfüllung versehen wird, und sich dadurch in sehr kurzer Zeit entfalten kann.

In der Querschnittdarstellung der Figur 3 sind der erste Bereich 12 bzw. der Initialbereich 14 durch einen Strich angedeutet. An der Innenfläche 5 der Stirnwand 4 ist der erste Bereich 12 mit einer Vertiefung 38 bzw. einer Nut 39 zur gezielten Schwächung versehen und bildet dadurch die Schwächungszone 10. Der erste Bereich 12 trennt die untere klappenartige Öffnung 28 von der oberen klappenartigen Öffnung 26. Die obere klappenartige Öffnung 26 kann um ein oberes Scharnier 30 schwenken. Die untere klappenartige Öffnung kann um ein unteres Scharnier 32 schwenken.

Figur 4 verdeutlicht anhand der schematischen Querschnittdarstellung entsprechend Figur 3 den sich entfaltenden Gassack 8, der mit einem Aufschlagbereich 46 mittig auf den ersten Bereich bzw. den Initialbereich 14 auftrifft und diesen zum Durchreißen bringt. Die Öffnungen 26, 28 können dadurch in kurzer Zeit und in genau festgelegter Weise um die oberen bzw. unteren Scharniere 30, 32 schwenken und auf diese Weise den sich vollständig entfaltenden Gassack 8 ungehindert austreten lassen, wodurch der auf den Gassack 8 auftreffende Insasse zuverlässig vor Verletzung geschützt werden kann.

### BEZUGSZEICHENLISTE

- Armaturentafel: 2
- Stirnwand: 4
- Innenfläche (der Stirnwand): 5
- Abdeckung: 6
- Gassack: 8
- Schwächungszone: 10
- erster Bereich: 12
- Initialbereich: 14
- zweiter Bereich: 16
- dritter Bereich: 18
- erster Übergangsbereich: 20
- erster Radius: 21
- oberer Abschnitt: 22
- unterer Abschnitt: 24
- obere (klappenartige) Öffnung: 26
- untere (klappenartige) Öffnung: 28
- oberes Scharnier: 30
- unteres Scharnier: 32
- zweiter Übergangsbereich: 34
- zweiter Radius: 35
- taschenförmiger Abschnitt: 36
- Vertiefung: 38
- Nut: 39
- oberste Schicht (der Abdeckung): 40
- Trägerschicht: 42
- Dämpfungsschicht: 44
- Aufschlagbereich: 46

## Patentansprüche

1. Abdeckung (6) für einen Gassack (8) einer Aufprallschutzvorrichtung für Fahrzeuginsassen mit einer Stirnwand (4), die zwischen dem gefalteten Gassack (8) und einem Fahrzeuginsassen angeordnet ist, wobei die Abdeckung (6) definierte linienartige Schwächungszonen (10) aufweist, die bei sich entfaltendem Gassack (8) als Sollbruchstellen fungieren und eine Öffnung der Abdeckung ermöglichen, wobei die Festigkeit der Schwächungszonen (10) variabel ausgestaltet ist, wobei die Schwächungszonen (10) innerhalb eines ersten Bereichs (12), der der Mitte der Stirnwand (4) näher liegt, eine relativ geringere Festigkeit aufweisen, wogegen die Schwächungszonen (10) in zweiten bzw. dritten Bereichen (16 bzw. 18), die von der Mitte der Stirnwand (4) weiter entfernt angeordnet sind, eine relativ größere Festigkeit aufweisen, wobei die Schwächungszonen (10) innerhalb des der Mitte der Stirnwand (4) näher liegenden ersten Bereichs (12) einen Initialbereich (14) in Form eines bogen- oder taschenförmigen Abschnittes aufweisen, an dem der sich entfaltende Gassack (8) als erstes flächig andrückt und der vom sich entfaltenden Gassack (8) als erstes geöffnet wird, wobei die Schwächungszonen (10) jeweils zwei klappenartige Öffnungen (26, 28) definieren, die bei sich entfaltendem Gassack (8) um jeweils ein Scharnier (30; 32) aufgeschwenkt werden,
**dadurch gekennzeichnet, dass** zweite Übergangsbereiche (34) zwischen zweitem bzw. zwischen drittem Bereich (16, 18) und den Scharnieren (30, 32) vorgesehen sind und bei wenigstens einer der klappenartigen Öffnungen (26, 28) zwischen zweiten Übergangsbereichen (34) und Scharnier (30; 32) jeweils ein S-förmiger bzw. taschenförmiger Abschnitt (36) vorgesehen ist, der jeweils eine Auswölbung in Richtung des ersten Bereichs (12) aufweist.

2. Abdeckung nach Anspruch 1, **dadurch gekennzeichnet, dass** die zweiten und dritten Bereiche (16, 18) der linienartigen Schwächungszonen (10) jeweils an gegenüber liegenden Enden des ersten Bereichs (12) anschließen und jeweils in diesen übergehen.

3. Abdeckung nach Anspruch 1 oder 2, **dadurch gekennzeichnet, dass** der erste Bereich (12) im Wesentlichen horizontal im Fahrzeug verläuft und dass die zweiten und dritten Bereiche (16, 18) im Wesentlichen vertikal verlaufen.

4. Abdeckung nach Anspruch 1 oder 2, **dadurch gekennzeichnet, dass** der erste Bereich (12) im Wesentlichen vertikal im Fahrzeug verläuft und dass die zweiten und dritten Bereiche (16, 18) im Wesentlichen horizontal verlaufen.

5. Abdeckung nach einem der Ansprüche 1 bis 4, **dadurch gekennzeichnet, dass** der Initialbereich (14) mittig innerhalb des ersten Bereichs (12) angeordnet ist.

6. Abdeckung nach Anspruch 5, **dadurch gekennzeichnet, dass** der Initialbereich (14) als dreieckförmige Ausbuchtung innerhalb des im Übrigen geradlinig verlaufenden ersten Bereichs (12) ausgestaltet ist.

7. Abdeckung nach Anspruch 6, **dadurch gekennzeichnet, dass** eine Spitze des als dreieckförmige Ausbuchtung ausgestalteten Initialbereichs (14) einen Spitzenwinkel größer als 90° aufweist.

8. Abdeckung nach Anspruch 5, **dadurch gekennzeichnet, dass** der Initialbereich (14) als bogenförmige Ausbuchtung innerhalb des im Übrigen geradlinig verlaufenden ersten Bereichs (12) ausgestaltet ist.

9. Abdeckung nach Anspruch 8, **dadurch gekennzeichnet, dass** der bogenförmige Initialbereich (14) mehr als die Hälfte des ersten Bereichs (12) einnimmt.

10. Abdeckung für einen Gassack einer Aufprallschutzvorrichtung für Fahrzeuginsassen mit einer Stirnwand, die zwischen dem gefalteten Gassack und einem Fahrzeuginsassen angeordnet ist, wobei die Abdeckung definierte linienartige Schwächungszonen aufweist, die bei sich entfaltendem Gassack als Sollbruchstellen fungieren und eine Öffnung der Abdeckung ermöglichen, wobei die Festigkeit der Schwächungszonen variabel ausgestaltet ist, wobei die Schwächungszonen innerhalb eines ersten Bereichs, der der Mitte der Stirnwand näher liegt, eine relativ geringere Festigkeit aufweisen, wogegen die Schwächungszonen in zweiten bzw. dritten Bereichen, die von der Mitte der Stirnwand weiter entfernt angeordnet sind, eine relativ größere Festigkeit aufweisen, wobei die Schwächungszonen (10) jeweils zwei klappenartige Öffnungen (26, 28) definieren, die bei sich entfaltendem Gassack (8) um jeweils ein Scharnier (30; 32) aufgeschwenkt werden und erste Übergangsbereiche (20) zwischen dem ersten und zweiten Bereich (12, 16) bzw. zwischen dem ersten und dritten Bereich (12, 18) vorgesehen sind, die jeweils als erste Radien (21) ausgebildet sind, **dadurch gekennzeichnet, dass** zweite Übergangsbereiche (34) zwischen zweitem bzw. zwischen drittem Bereich (16, 18) und den Scharnieren (30, 32) vorgesehen sind und bei wenigstens einer der klappenartigen Öffnungen (26, 28) zwischen zweiten Übergangsbereichen (34) und Scharnier (30; 32) jeweils ein S-förmiger bzw. taschenförmiger Abschnitt (36) vorgesehen ist, der jeweils eine Auswölbung in Richtung des ersten Bereichs (12) aufweist.

11. Abdeckung nach Anspruch 10, **dadurch gekennzeichnet, dass** der zweite und der dritte Bereich (16, 18) durch die Radien (21) jeweils in obere und untere Abschnitte (22, 24) unterteilt sind.

12. Abdeckung nach einem der Ansprüche 1 bis 11, **dadurch gekennzeichnet, dass** die Scharniere (30; 32) jeweils parallel zum ersten Bereich (12) angeordnet sind.

13. Abdeckung nach einem der Ansprüche 1 bis 12, **dadurch gekennzeichnet, dass** die zweiten Übergangsbereiche (34) zwischen zweitem bzw. zwischen drittem Bereich (16, 18) und den Scharnieren (30, 32) jeweils als zweite Radien (35) ausgebildet sind.

14. Abdeckung nach einem der vorstehenden Ansprüche, **dadurch gekennzeichnet, dass** die Schwächungszonen (10) Reihen beabstandeter Vertiefungen (38) an der Innenfläche (5) der Stirnwand (4) aufweisen, die von außen nicht sichtbar sind.

15. Abdeckung nach Anspruch 14, **dadurch gekennzeichnet, dass** die Vertiefungen (38) in Bereichen der Schwächungszonen (10), die zuerst aufbrechen sollen, mit geringerem Abstand zueinander angeordnet sind als in Bereichen, die später aufbrechen sollen.

16. Abdeckung nach einem der Ansprüche 1 bis 13, **dadurch gekennzeichnet, dass** die Schwächungszonen (10) kontinuierliche Nuten (39) an der Innenfläche (5) der Stirnwand (4) aufweisen, die von außen nicht sichtbar sind.

17. Abdeckung nach Anspruch 16, **dadurch gekennzeichnet, dass** die Nuten (39) in Bereichen der Schwächungszonen (10), die zuerst aufbrechen sollen, tiefer ausgebildet sind als in Bereichen, die später aufbrechen sollen.

18. Abdeckung nach einem der vorstehenden Ansprüche, **dadurch gekennzeichnet, dass** die Abdeckung (6) einen mehrschichtigen Aufbau aufweist, dessen oberste Schicht (40) keine Schwächungszonen (10) aufweist.

19. Abdeckung nach Anspruch 18, **dadurch gekennzeichnet, dass** die Schwächungszonen (10) innerhalb einer relativ formstabilen Trägerschicht (42) eingebracht sind, die zumindest von einer weiteren obersten Schicht (40) bedeckt ist.

20. Abdeckung nach Anspruch 18 oder 19, **dadurch gekennzeichnet, dass** zwischen Trägerschicht (42) mit den Schwächungszonen (10) und oberster Schicht (40) eine flexible Dämpfungsschicht (44) vorgesehen ist.

21. Verfahren zur Herstellung einer Abdeckung (6) für einen Gassack (8) einer Aufprallschutzvorrichtung für Fahrzeuginsassen gemäß einem der Ansprüche 1 bis 20, bei dem in eine Trägerschicht (42) einer Stirnwand (4), die zwischen dem gefalteten Gassack (8) und einem Fahrzeuginsassen angeordnet ist, abschnittsweise linienförmige Schwächungszonen (10) in Gestalt von Nuten (39) oder Vertiefungen (38) eingebracht werden, die mittels Laserabtragverfahren hergestellt werden.

## Claims

1. A cover (6) for an airbag (8) of an impact protection apparatus for occupants of a vehicle, comprising a face wall (4) which is arranged between the folded airbag (8) and an occupant, with the cover (6) comprising defined linear weakening zones (10) which act as predetermined breaking points when the airbag (8) inflates and enable an opening of the cover, with the strength of the weakening zones (10) being variably arranged, with the weakening zones (10) having a relatively lower strength within a first region (12) which is closer to the center of the face wall (4), with the weakening zones (10) having a relatively higher strength in second and third zones (16 and 18) which are arranged farther away from the center of the face wall (4), with the weakening zones (10) having an initial region (14) in the form of a bow-shaped or pocket-like section within the first region (12) closer to the center of the face wall (4), on which the inflating airbag (8) will press first in a planar manner and which is opened first by the inflating airbag (8), with the weakening zones (10) each defining two flap-like openings (26, 28) which are each pivoted up about a hinge (30; 32) when the airbag (8) inflates, **characterized in that** second transitional regions (34) are provided between the second or between the third region (16, 18) and the hinges (30, 32), and an S-shaped or pocket-shaped section (36) is provided in at least one of the flap-like openings (26, 28) between the second transitional regions (34) and the hinge (30; 32), which section each comprises a bulging in the direction towards the first region (12).

2. A cover according to claim 1, **characterized in that** the second and third regions (16, 18) of the linear weakening zones (10) are each adjacent to opposite ends of the first region (12) and each converge into the same.

3. A cover according to claim 1 or 2, **characterized in that** the first region (12) extends substantially horizontally in the vehicle and the second and third regions (16, 18) extend substantially vertically.

4. A cover according to claim 1 or 2, **characterized in that** the first region (12) extends substantially vertically in the vehicle and the second and third regions (16, 18) extend substantially horizontally.

5. A cover according to one of the claims 1 to 4, **characterized in that** the initial region (14) is arranged in the center within the first region (12).

6. A cover according to claim 5, **characterized in that** the initial region (14) is arranged as a triangular depression within the first region (12) which extends linearly in all other respects.

7. A cover according to claim 6, **characterized in that** a tip of the initial region (14) which is arranged as a triangular depression has an apex angle of larger than 90°.

8. A cover according to claim 5, **characterized in that** the initial region (14) is arranged as an arc-shaped depression within the first region (12) which is arranged linearly in all other respects.

9. A cover according to claim 8, **characterized in that** the arc-shaped initial region (14) assumes more than half of the first region (12).

10. A cover for an airbag of an impact protection apparatus for occupants of a vehicle, comprising a face wall which is arranged between the folded airbag and an occupant, with the cover comprising defined linear weakening zones which act as predetermined breaking points when the airbag inflates and enable an opening of the cover, with the strength of the weakening zones being variably arranged, with the weakening zones having a relatively lower strength within a first region which is closer to the center of the face wall, whereas the weakening zones in the second and third zones which are arranged farther away from the center of the face wall have a relatively higher strength, with the weakening zones (10) each defining two flap-like openings (26, 28) which are each pivoted up about a hinge (30; 32) when the airbag (8) inflates, and first transitional regions (20) are provided between the first and second region (12, 16) and between the first and third region (12, 18) which are each arranged as first radii (21), **characterized in that** second transitional regions (34) are provided between the second or between the third region (16, 18) and the hinges (30, 32), and an S-shaped or pocket-shaped section (36) is provided in at least one of the flap-like openings (26, 28) between the second transitional regions (34) and the hinge (30; 32), which section each comprises a bulging in the direction towards the first region (12).

11. A cover according to claim 10, **characterized in that** the second and third region (16, 18) are each subdivided by radii (21) into upper and lower sections (22, 24).

12. A cover according to one of the claims 1 to 11, **characterized in that** the hinges (30; 32) are each arranged parallel to the first region (12).

13. A cover according to one of the claims 1 to 12, **characterized in that** the second transitional regions (34) between the second or between the third region (16, 18) and the hinges (30, 32) are each arranged as second radii (35).

14. A cover according to one of the preceding claims, **characterized in that** the weakening zones (10) comprise rows of spaced depressions (38) on the inside surface (5) of the face wall (4) which are not visible from the outside.

15. A cover according to claim 14, **characterized in that** the depressions (38) are arranged with a smaller distance from each other in regions of the weakening zones (10) which should break open first than in regions which should break open later.

16. A cover according to one of the claims 1 to 13, **characterized in that** the weakening zones (10) comprise continuous grooves (39) on the inside surface (5) of the face wall (4) which are not visible from the outside.

17. A cover according to claim 16, **characterized in that** the grooves (39) are provided with a deeper arrangement in regions of the weakening zone (10) which should break open first than in regions which should break open later.

18. A cover according to one of the preceding claims, **characterized in that** the cover (6) has a multi-layered arrangement whose uppermost layer (40) does not have any weakening zones (10).

19. A cover according to claim 18, **characterized in that** the weakening zones (10) are introduced in a carrier layer (42) which is relatively dimensionally stable and which is covered at least by one further uppermost layer (40).

20. A cover according to claim 18 or 19, **characterized in that** a flexible dampening layer (44) is provided between the carrier layer (42) and uppermost layer (40).

21. A method for producing a cover (6) for an airbag (8) of an impact protection apparatus for occupants of a vehicle according to one of the claims 1 to 20, wherein linear sectional weakening zones (10) in the form of grooves (39) or depressions (38) which are produced by means of a laser cutting process are introduced in a carrier layer (42) of a face wall (4) which is arranged between the folded airbag (8) and an occupant of the vehicle.

## Revendications

1. Couverture (6) pour un ballon de gaz (8) d'un dispositif de protection contre les collisions d'occupants d'un véhicule avec une paroi frontale (4) disposée entre le ballon de gaz plié (8) et un occupant du véhicule, laquelle couverture (6) présente des zones affaiblies (10) linéaires définies qui servent de zones de rupture lorsque le ballon de gaz (8) se déploie et permettent l'ouverture de la couverture, la solidité des zones affaiblies (10) étant variable, les zones affaiblies (10) ayant une solidité relativement plus faible dans une première zone (12) proche du milieu de la paroi frontale (4) alors que les zones affaiblies (10) d'une deuxième zone et d'une troisième (16 resp. 18) plus éloignées du milieu de la paroi frontale (4) ont une solidité relativement plus grande, les zones affaiblies (10) situées à l'intérieur de la première zone (12) plus proche du milieu de la paroi frontale (4) présentant une zone initiale (14) formant une partie en forme d'arc de cercle ou de poche sur laquelle le ballon de gaz (8) en train de se déployer s'appuie d'abord à plat et qui est ouverte la première par le ballon de gaz (8) qui se déploie, les zones affaiblies (10) définissant deux ouvertures en forme de volet (26, 28) qui pivotent chacune autour d'une charnière (30 ; 32) quand le ballon de gaz (8) se déploie, **caractérisée en ce que** des deuxièmes zones de transition (34) sont prévues entre la deuxième ou la troisième zone (16, 18) et les charnières (30, 32) et il est prévu pour au moins une des ouvertures en forme de volet (26, 28) entre les deuxièmes zones de transition (34) et la charnière (30 ; 32) une partie en forme de S ou de poche (36) qui présente une convexité en direction de la première zone (12).

2. Couverture selon la revendication 1, **caractérisée en ce que** les deuxième et troisième zones (16, 18) des zones affaiblies (10) linéaires se raccordent à des extrémités opposées de la première zone (12) et se fondent chacune dans celle-ci.

3. Couverture selon la revendication 1 ou 2, **caractérisée en ce que** la première zone (12) est sensiblement horizontale dans le véhicule et **en ce que** les deuxième et troisième zones (16, 18) sont sensiblement verticales.

4. Couverture selon la revendication 1 ou 2, **caractérisée en ce que** la première zone (12) est sensiblement verticale dans le véhicule et **en ce que** les deuxième et troisième zones (16, 18) sont sensiblement horizontales.

5. Couverture selon l'une des revendications 1 à 4, **caractérisée en ce que** la zone initiale (14) est disposée au centre dans la première zone (12).

6. Couverture selon la revendication 5, **caractérisée en ce que** la zone initiale (14) est conformée comme un renfoncement triangulaire dans la première zone (12) qui est rectiligne par ailleurs.

7. Couverture selon la revendication 6, **caractérisée en ce qu'**une pointe de la zone initiale (14) conformée comme un renfoncement triangulaire présente un angle de pointe supérieur à 90°.

8. Couverture selon la revendication 5, **caractérisée en ce que** la zone initiale (14) est conformée comme un renfoncement en arc de cercle à l'intérieur de la première zone (12) qui est rectiligne par ailleurs.

9. Couverture selon la revendication 8, **caractérisée en ce que** la zone initiale (14) en arc de cercle occupe plus de la moitié de la première zone (12).

10. Couverture pour un ballon de gaz d'un dispositif de protection contre les collisions d'occupants d'un véhicule avec une paroi frontale disposée entre le ballon de gaz plié et un occupant du véhicule, laquelle couverture présente des zones affaiblies linéaires définies qui servent de zones de rupture lorsque le ballon de gaz se déploie et permettent l'ouverture de la couverture, la solidité des zones affaiblies étant variable, les zones affaiblies ayant une solidité relativement plus faible dans une première zone proche du milieu de la paroi frontale alors que les zones affaiblies d'une deuxième zone et d'une troisième plus éloignées du milieu de la paroi frontale ont une solidité relativement plus grande, les zones affaiblies (10) définissant chacune deux ouvertures en forme de volet (26, 28) qui pivotent chacune autour d'une charnière (30 ; 32) quand le ballon de gaz (8) se déploie et des premières zones de transition (20) conformées comme des premiers rayons de courbure (21) étant prévues entre la première zone et la deuxième (12, 16) et entre la première zone et la troisième (12, 18), **caractérisée en ce que** des deuxièmes zones de transition (34) sont prévues entre la deuxième ou la troisième zone (16, 18) et les charnières (30, 32) et il est prévu pour au moins une des ouvertures en forme de volet (26, 28) entre les deuxièmes zones de transition (34) et la charnière (30 ; 32) une partie en forme de S ou de poche (36) qui présente une convexité en direction de la première zone (12).

11. Couverture selon la revendication 10, **caractérisée en ce que** les deuxième et troisième zones (16, 18) sont divisées chacune par les rayons de courbure (21) en une partie supérieure et une autre inférieure (22, 24).

12. Couverture selon l'une des revendications 1 à 11, **caractérisée en ce que** les charnières (30 ; 32) sont disposées chacune parallèlement à la première zone (12).

13. Couverture selon l'une des revendications 1 à 12, **caractérisée en ce que** les deuxièmes zones de transition (34) entre la deuxième ou la troisième zone (16, 18) et les charnières (30, 32) sont conformées comme des deuxièmes rayons de courbure (35).

14. Couverture selon l'une des revendications précédentes, **caractérisée en ce que** les zones affaiblies (10) présentent des rangées de creux (38) espacés sur la surface intérieure (5) de la paroi frontale (4), qui sont invisibles de l'extérieur.

15. Couverture selon la revendication 14, **caractérisée en ce que** les creux (38) des parties des zones affaiblies (10) qui doivent céder les premières sont moins écartés les uns des autres que ceux des parties qui doivent céder plus tard.

16. Couverture selon l'une des revendications 1 à 13, **caractérisée en ce que** les zones affaiblies (10) présentent des gorges continues (39) sur la face intérieure (5) de la paroi frontale (4), qui sont invisibles de l'extérieur.

17. Couverture selon la revendication 16, **caractérisée en ce que** les gorges (39) des parties des zones affaiblies (10) qui doivent céder les premières sont plus profondes que celles des parties qui doivent céder plus tard.

18. Couverture selon l'une des revendications précédentes, **caractérisée en ce que** la couverture (6) présente une structure en plusieurs couches, dont la couche supérieure (40) ne présente pas de zones affaiblies (10).

19. Couverture selon la revendication 18, **caractérisée en ce que** les zones affaiblies (10) sont ménagées dans une couche de support (42) de forme relativement stable, qui est recouverte au moins par une autre couche supérieure (40).

20. Couverture selon la revendication 18 ou 19, **caractérisée en ce qu'**il est prévu entre la couche de support (42) présentant les zones affaiblies (10) et la couche supérieure (40) une couche d'amortissement flexible (44).

21. Procédé de fabrication d'une couverture (6) pour un ballon de gaz (8) d'un dispositif de protection contre les collisions d'occupants d'un véhicule selon l'une des revendications 1 à 20, dans lequel est il est prévu dans une couche de support (42) d'une paroi frontale (4) disposée entre le ballon de gaz plié (8) et un occupant du véhicule des zones localement affaiblies (10) linéaires prenant la forme de gorges (39) ou de creux (38) qui sont produits par un procédé d'enlèvement de matière par laser.
